# EUROPEAN PATENT SPECIFICATION

(11) **EP 4 145 602 B1**
(45) Date of publication and mention of the grant of the patent: **11.03.2026**
(21) Application number: 21889663.7
(22) Date of filing: 08.11.2021
(51) Int. Cl.: H01M 50/20, H01M 10/48, H01M 10/42

(54) **BATTERY PACK AND AUTOMOBILE COMPRISING SAME**
BATTERIEPACK UND AUTOMOBIL DAMIT
BLOC-BATTERIE ET AUTOMOBILE LE COMPRENANT

(30) Priority: 09.11.2020 KR 20200148930
(43) Date of publication of application: 08.03.2023
(73) Proprietor: LG Energy Solution, Ltd., Seoul 07335 (KR)
(72) Inventor: PARK, Jin-Yong, Daejeon 34122 (KR); KIM, Kyung-Woo, Daejeon 34122 (KR); CHI, Ho-June, Daejeon 34122 (KR); PARK, Jhin-Ha, Daejeon 34122 (KR); JIN, Hee-Jun, Daejeon 34122 (KR); MUN, Jeong-O, Daejeon 34122 (KR)
(74) Representative: Hoffmann Eitle
(86) International application number: PCT/KR2021/016171
(87) International publication number: WO 2022/098198

(56) References cited:
- CN-A- 111 430 650
- CN-U- 210 006 765
- CN-U- 210 200 841
- JP-A- 2019 129 042
- JP-A- 2019 169 281
- KR-A- 20200 084 450
- US-A1- 2014 322 568

## Description

### TECHNICAL FIELD

The present disclosure relates to a battery pack and a vehicle including the same, and more particularly, to a battery pack having a structure in which a plurality of battery modules are connected to a battery management system (BMS) by using a component such as a large-area flexible printed circuit (FPC) or a large-area flexible flat cable (FFC), instead of a wire harness, and a vehicle including the battery pack.

The present application claims priority to Korean Patent Application No. 10-2020-0148930 filed on November 9, 2020 in the Republic of Korea.

### BACKGROUND ART

In general, a battery pack includes a battery module for storing electrical energy (the battery module includes a plurality of battery cells) and a battery management system (BMS) for electrical sensing and system control.

In general, in a battery pack including a plurality of battery modules, electrical connection between each battery module and a BMS is made through a path such as a battery cell - a printed circuit pattern - a connector - a wire harness - a connector - a BMS.

Voltage sensing for a unit stack including a plurality of battery cells connected in parallel to one another is performed through sensing lines connected to positive electrodes and negative electrodes of the battery cells. In a battery module including a plurality of unit stacks connected in series to one another, in order to individually sense a voltage of each unit stack, the number of printed circuit patterns connected to a connector provided in the battery module should be increased.

Also, when one battery pack is made by using a plurality of battery modules, a weight and a thickness of a wire harness for connecting a BMS to a connector provided in each battery module is inevitably increased, and accordingly, a space occupied by the wire harness in the battery pack is increased and loss in terms of energy density is inevitably increased.

In the case of a battery pack for a vehicle, a cross beam for securing rigidity against a collision may be provided, and a wire harness used to connect each battery module to a BMS may be located in an inner space of the cross beam. Accordingly, when a volume of the wire harness is increased, the inner space of the cross beam for accommodating the wire harness should be increased, which may lead to loss of energy density and deterioration of rigidity of the cross beam.

Accordingly, there is a demand for a method capable of simplifying an installation structure of a sensing line for measuring a voltage to improve energy density and increase rigidity against external impact.

JP 2019 129042 A discloses a battery unit for a vehicle which can prevent electromagnetic interference against inside and outside of a battery case due to electric noise in an electric cable. The disclosed battery unit for a vehicle comprises a battery module on which a plurality of battery cells are stacked; a battery case for housing the

battery module; a connector part provided in the battery case; and an electric cable which electrically connects the connector part and the battery module. The battery case comprises a metal frame member which includes a hollow part. The electric cable is arranged in the hollow part of the frame member.

US 2014/322568 A1 discloses a battery pack for an electric car. In the disclosed battery pack, a plurality of battery modules are mounted to be divided between the front and rear of a middle cross member and a main switch and a junction board are disposed in the front and rear of the middle cross member respectively. A bent part of a second high voltage cable, which bends into a U-shape and pass through beneath the middle cross member, is held by a cable holder and fixed to a fixing part. Since only a bus bar disposed in the intermediate part of the first high voltage cable is bent into a U-shape and passed through beneath the middle cross member, not only is a wiring operation of the first high voltage cable easy, but it is also possible to minimize the length of the bus bar to thus enhance the reliability with respect to vibration.

### DISCLOSURE

### Technical Problem

The present disclosure is designed to solve the problems of the related art, and therefore the present disclosure is directed to simplifying an installation structure of a sensing line for sensing a voltage of a unit stack constituting a battery pack to improve energy density and increase rigidity against external impact.

However, the technical purpose to be solved by the present disclosure are not limited to the above, and other objects not mentioned herein will be clearly understood by one of ordinary skill in the art from the following disclosure.

### Technical Solution

In one aspect of the present disclosure, there is provided a battery pack including: a pack tray having an inner space; a plurality of battery modules accommodated in the pack tray; a battery management system (BMS) accommodated in the pack tray; a first cable assembly configured to connect the BMS to battery modules constituting a first module group from among the plurality of battery modules, the first cable assembly being located over the first module group; and a second cable assembly configured to connect the BMS to battery modules constituting a second module group from among the plurality of battery modules, the second cable assembly being located over the second module group.

The pack tray includes a plurality of partitions extending in a width direction of the pack tray and dividing the inner space of the pack tray; and a cross beam extending in a longitudinal direction of the pack tray and dividing the inner space of the pack tray.

The first module group may be located on a side of the cross beam, and the second module group may be located on the other side of the cross beam.

Each of the plurality of battery modules may include: a cell stack in which a plurality of battery cells are stacked; a module housing in which the cell stack is accommodated; a sensing line electrically connected to the plurality of battery cells; and a module connector connected to the sensing line.

The BMS may include a pair of BMS connectors respectively provided at a position corresponding to the first module group and a position corresponding to the second module group.

Each of the first cable assembly and the second cable assembly may include: a sensing cable having a printed circuit pattern; a plurality of first cable connectors connected to the sensing cable and fastened to the module connector; and a second cable connector connected to the sensing cable and fastened to the BMS connector.

The sensing line may include: a front sensing line located on a side of the cell stack in a longitudinal direction of the cell stack; a rear sensing line located on the other side of the cell stack in the longitudinal direction of the cell stack; and a connection sensing line configured to connect the front sensing line to the rear sensing line, wherein the module connector is coupled to the front sensing line.

The sensing line may include: a front sensing line located on a side of the cell stack in a longitudinal direction of the cell stack; and a rear sensing line located on the other side of the cell stack in the longitudinal direction of the cell stack, wherein the module connector includes: a front module connector coupled to the front sensing line; and a rear module connector coupled to the rear sensing line.

The first cable connector may include: a front cable connector fastened to the front module connector; and a rear cable connector fastened to the rear module connector.

In another aspect of the present disclosure, there is also provided a vehicle including the battery pack.

### Advantageous Effects

According to an aspect of the present disclosure, an installation structure of a sensing line for sensing a voltage of a unit stack constituting a battery pack may be simplified, and thus, energy density may be improved and rigidity against external impact may be increased.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIGS. 1 and 2 are views illustrating a battery pack according to an embodiment of the present disclosure.
FIGS. 3 and 4 are views illustrating a battery module according to the present disclosure.
FIG. 5 is a view illustrating a cable assembly according to the present disclosure.
FIG. 6 is a partial cross-sectional view illustrating a cross beam of a pack tray according to the present disclosure.
FIG. 7 is a view illustrating a battery module according to the present disclosure, which is a modification of the battery module of FIG. 4.
FIG. 8 is a view illustrating a cable assembly according to the present disclosure, which has a structure corresponding to the battery module of FIG. 7.
FIGS. 9 through 11 are views illustrating a method of manufacturing a cable assembly according to the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other modifications could be made thereto without departing from the scope of the claimed invention.

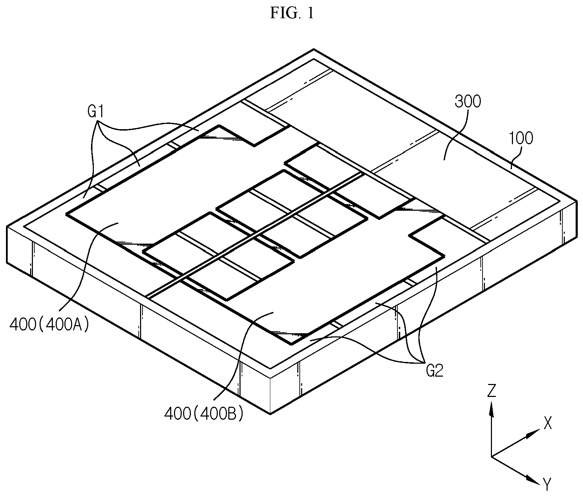

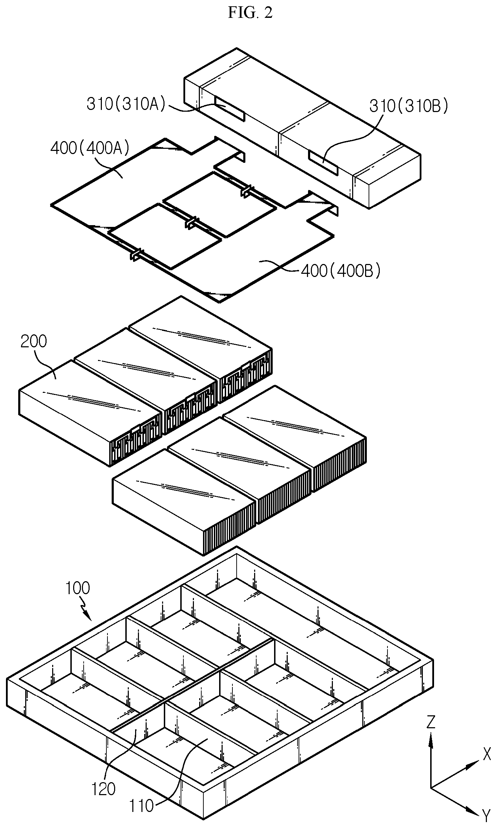

Referring to FIGS. 1 and 2, a battery pack according to an embodiment of the present disclosure includes a pack tray 100, a plurality of battery modules 200, a battery management system (BMS) 300, and a cable assembly 400.

The pack tray 100 includes a plurality of partitions 110 extending in a width direction (direction parallel to a Y-axis) of the pack tray 100 and dividing an inner space of the pack tray 100, and a cross beam 120 extending in a longitudinal direction (direction parallel to an X-axis) of the pack tray 100 and dividing the inner space of the pack tray 100.

The plurality of partitions 110 are spaced apart from one another at regular intervals between a side wall located on a side of the pack tray in the longitudinal direction of the pack tray 100 and a side wall located on the other side of the pack tray 100. The cross beam 120 crosses the center of the pack tray 100 in the width direction of the pack tray 100.

Each of the plurality of battery modules 200 is accommodated in the pack tray 100. Each of the plurality of battery modules 200 is located in each receiving space divided by the partition 110 and the cross beam 120.

Battery modules 200 constituting a first module group G1 from among the plurality of battery modules 200 are located on a side of the cross beam 120 in the width direction of the pack tray 100, and battery modules 200 constituting a second module group G2 are located on the other side of the cross beam 120 in the width direction of the pack tray 100.

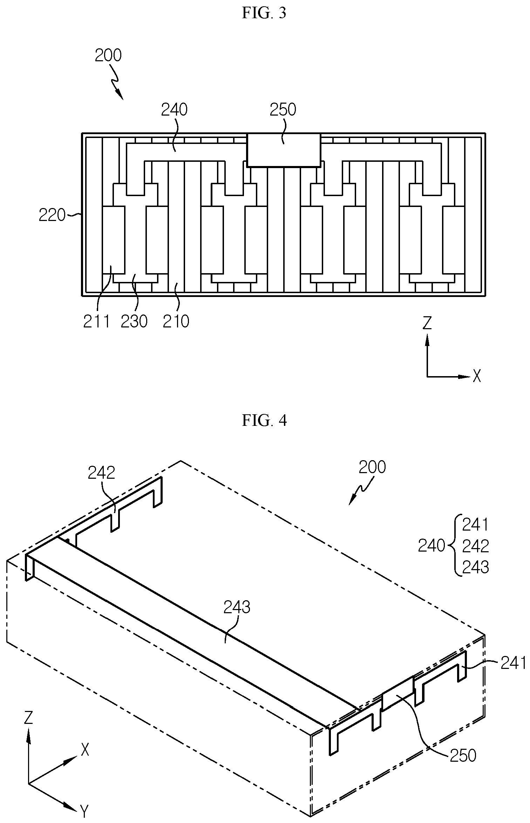

Referring to FIGS. 1 through 4, each of the plurality of battery modules 200 includes a cell stack in which a plurality of battery cells 210 are stacked, a module housing 220 in which the cell stack is accommodated, a sensing line 240 electrically connected to the plurality of battery cells 210, and a connector 250 coupled to the sensing line 240. Electrical connection between the sensing line 240 and the plurality of battery cells 210 may be made by direct coupling between the two elements, or may be made through a bus bar 230.

The battery cell 210 may be, for example, a pouch-type battery cell. The module housing 220 has a shape in which both sides in a longitudinal direction (direction parallel to the Y-axis) of the module housing 220 are open. The battery cell 210 has a shape in which electrode leads 211 are drawn out in opposite directions in a longitudinal direction (direction parallel to the Y-axis) of the battery cell 210.

The sensing line 240 includes a front sensing line 241 located on a side of the cell stack in a longitudinal direction (direction parallel to the Y-axis) of the cell stack, a rear sensing line 242 located on the other side of the cell stack in the longitudinal direction of the cell stack, and a connection sensing line 243 configured to connect the front sensing line 241 to the rear sensing line 242. The sensing line 240 may be implemented as, for example, one flexible printed circuit (FPC) or one flexible flat cable (FFC). Alternatively, the sensing line 240 may have a structure in which connection between the front sensing line 241 and the connection sensing line 243 and connection between the rear sensing line 242 and the connection sensing line 243 are made through connectors. Even in this case, each of the front sensing line 241, the rear sensing line 242, and the connection sensing line 243 may be implemented as, for example, an FPC or an FFC.

The front sensing line 241 is electrically connected to electrode leads 211 exposed through an opening portion formed on a side of the module housing 220 in the longitudinal direction of the module housing 220. The rear sensing line 242 is electrically connected to the electrode leads 211 exposed through an opening portion formed on the other side of the module housing 220 in the longitudinal direction of the module housing 220.

The connector 250 is electrically connected to the battery cells 210 through the sensing line 240. The connector 250 is coupled to the front sensing line 241. A module connector 250 provided in the battery module 200 constituting the first module group G1 and a module connector 250 provided in the battery module 200 constituting the second module group G2 face each other with the cross beam 120 therebetween.

When electrical connection between the electrode leads 211 of the battery cell 210 and the sensing line 240 is made through the bus bar 230, a plurality of bus bars 230 may be provided. The cell stack may include a plurality of unit stacks, and the unit stacks may be connected in parallel by the bus bar 230. In this case, the front sensing line 241 is coupled to a plurality of bus bars 230 located on a side of the battery module 200 in a longitudinal direction (direction parallel to the Y-axis) of the battery module 200, and the rear sensing line 242 is coupled to a plurality of bus bars 230 located on the other side of the battery module 200 in the longitudinal direction of the battery module 200.

The BMS 300 is accommodated in the inner space of the pack tray 100. The BMS 300 is located on a side of the pack tray 100 in the longitudinal direction (parallel to the X-axis) of the pack tray 100. The BMS 300 is located in a receiving space formed between adjacent partitions 110, or a receiving space formed between one partition 110 and a side wall formed on a side of the pack tray 100 in the longitudinal direction of the pack tray 100.

The BMS 300 includes a pair of BMS connectors 310 respectively formed at a position corresponding to the first module group G1 and a position corresponding to the second module group G2. The pair of BMS connectors 310 include a first BMS connector 310A formed at a position corresponding to the first module group G1, and a second BMS connector 310B formed at a position corresponding to the second module group G2.

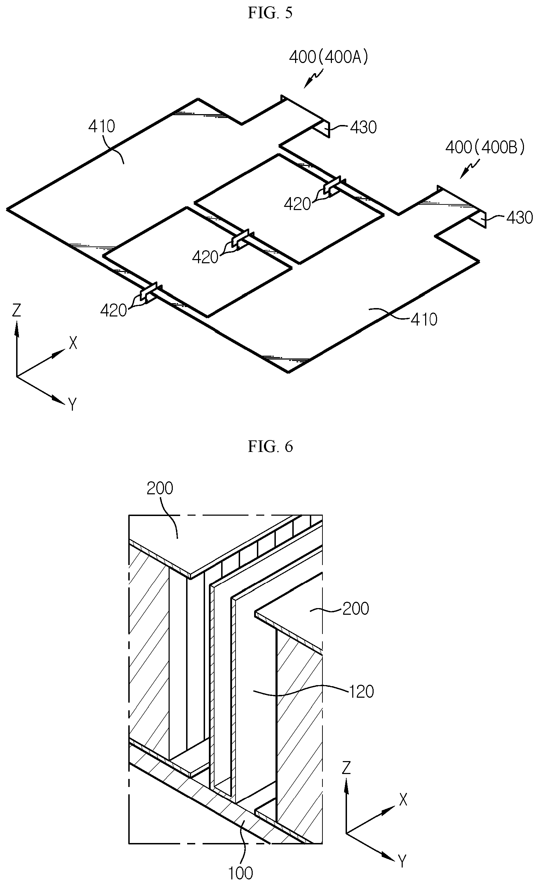

Referring to FIGS. 1 through 5, the cable assembly 400 includes a first cable assembly 400A and a second cable assembly 400B. The first cable assembly 400A connects the battery modules 200 constituting the first module group G1 to the BMS 300, and is located over the first module group G1. The second cable assembly 400B connects the battery modules 200 constituting the second module group G2 to the BMS 300, and is located over the second module group G2.

Each of the first cable assembly 400A and the second cable assembly 400B includes a sensing cable 410 including a printed circuit board, a plurality of first cable connectors 420 connected to the sensing cable 410 and fastened to the module connector 250, and a second cable connector 430 connected to the sensing cable 410 and fastened to the BMS connector 310.

The first cable connectors 420 of the first cable assembly 400A are provided so that the number of first cable connectors 420 of the first cable assembly 400A is the same as the number of battery modules 200 constituting the first module group G1. The first cable connectors 420 of the second cable assembly 400B are provided so that the number of first cable connectors 420 of the second cable assembly 400B is the same as the number of battery modules 200 constituting the second module group G2.

The second cable connector 430 of the first cable assembly 400A is fastened to the first BMS connector 310A, and the second cable connector 430 of the second cable assembly 400B is fastened to the second BMS connector 310B.

As described above, a battery pack according to an embodiment of the present disclosure is configured so that electrical connection between the battery module 200 and the BMS 300 is made through an FPC (or an FFC) and a connector. According to the battery pack according to an embodiment of the present disclosure, a sensing line does not need to be located in an inner space of the cross beam 120 crossing an inner space of the pack tray 100. Accordingly, a width occupied by the cross beam 120 may be reduced, thereby improving energy density. Also, when necessary, the rigidity of the cross beam 120 may be further increased by completely removing the inner space of the cross beam 120, thereby further improving safety in using the battery pack.

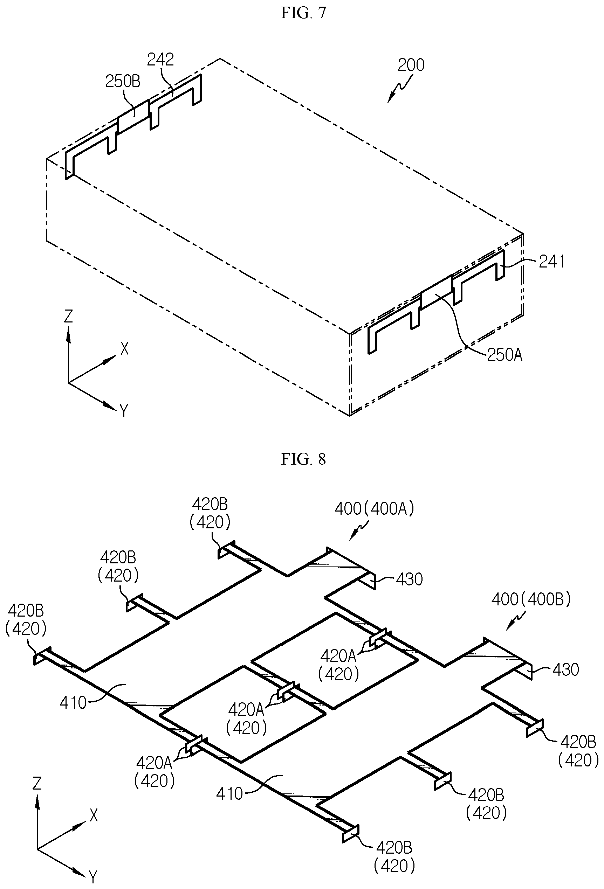

A battery pack according to another embodiment of the present disclosure will now be described with reference to FIGS. 7 and 8. When compared to the battery pack according to an embodiment of the present disclosure described above, the battery pack according to another embodiment of the present disclosure has a difference in structures of the battery module 200 and the cable assembly 400, but the remaining elements are substantially the same. Accordingly, in describing the battery pack according to another embodiment of the present disclosure, a difference will be mainly described, and the same description as that made in the above embodiment will not be repeated.

In the battery pack according to another embodiment of the present disclosure, the sensing line 240 provided in the battery module 200 includes the front sensing line 241 and the rear sensing line 242, but does not include the connection sensing line 243. Also, the module connector 250 includes a front module connector 250A coupled to the front sensing line 241, and a rear module connector 250B coupled to the rear sensing line 242.

The first cable connector 420 of the cable assembly 400 includes a front cable connector 420A fastened to the front module connector 250A, and a rear cable connector 420B fastened to the rear module connector 250B. Accordingly, electrical connection between the front sensing line 241 and the rear sensing line 242 is directly made by the first cable connector 420.

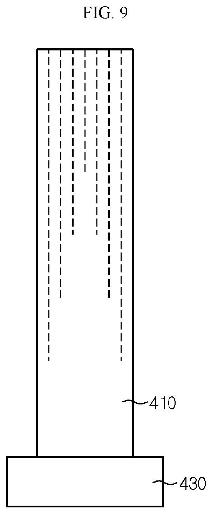

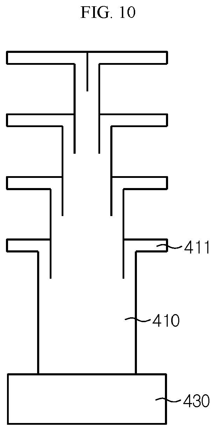

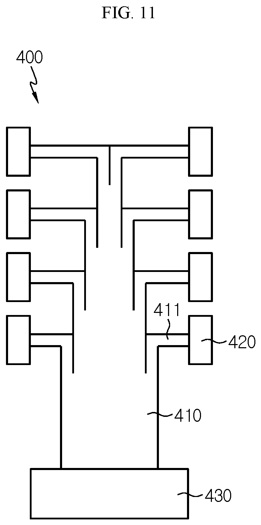

Referring to FIGS. 9 through 11, the cable assembly 400 may be manufactured by forming a necessary number of branch lines 411 by cutting a part of the sensing cable 410 and coupling the first cable connector 420 to each branch line 411.

A vehicle according to an embodiment of the present disclosure includes a battery pack according to the present disclosure as described above. That is, a vehicle according to an embodiment of the present disclosure includes a battery pack according to the present disclosure and a driving device such as a motor driven by receiving power from the battery pack according to the present disclosure.

Although the embodiments of the present disclosure have been illustrated and described above, the present disclosure is not limited to the above-described specific embodiments. Various modified embodiments may be made by one of ordinary skill in the art without departing from the scope of the present disclosure as claimed in the claims.

## Claims

1. A battery pack comprising:
a pack tray (100) having an inner space;
a plurality of battery modules (200) accommodated in the pack tray;
a battery management system, BMS, (300) accommodated in the pack tray;
a first cable assembly (400A) configured to connect the BMS to battery modules constituting a first module group (G1) from among the plurality of battery modules, the first cable assembly being located over the first module group; and
a second cable assembly (400B) configured to connect the BMS to battery modules constituting a second module group (G2) from among the plurality of battery modules, the second cable assembly being located over the second module group,
wherein the pack tray (100) comprises:
a plurality of partitions (110) extending in a width direction of the pack tray and dividing the inner space of the pack tray; and
a cross beam (120) extending in a longitudinal direction of the pack tray and dividing the inner space of the pack tray.

2. The battery pack of claim 1, wherein the first module group (G1) is located on a side of the cross beam (120), and
the second module group (G2) is located on the other side of the cross beam (120).

3. The battery pack of claim 1, wherein each of the plurality of battery modules (200) comprises:
a cell stack in which a plurality of battery cells (210) are stacked;
a module housing (220) in which the cell stack is accommodated;
a sensing line (240) electrically connected to the plurality of battery cells; and
a module connector (250) connected to the sensing line.

4. The battery pack of claim 3, wherein the BMS (300) comprises a pair of BMS connectors (310A, 310B) respectively provided at a position corresponding to the first module group (G1) and a position corresponding to the second module group (G2).

5. The battery pack of claim 4, wherein each of the first cable assembly (400A) and the second cable assembly (400B) comprises:
a sensing cable (401) having a printed circuit pattern;
a plurality of first cable connectors (420) connected to the sensing cable and fastened to the module connector; and
a second cable connector (430) connected to the sensing cable and fastened to the BMS connector.

6. The battery pack of claim 5, wherein the sensing line comprises:
a front sensing line (241) located on a side of the cell stack;
a rear sensing line (242) located on the other side of the cell stack; and
a connection sensing line (243) configured to connect the front sensing line to the rear sensing line,
wherein the module connector (250) is coupled to the front sensing line.

7. The battery pack of claim 5, wherein the sensing line (240) comprises:
a front sensing line (241) located on a side of the cell stack; and
a rear sensing line (242) located on the other side of the cell stack,
wherein the module connector (250) comprises:
a front module connector (250A) coupled to the front sensing line; and
a rear module connector (250B) coupled to the rear sensing line.

8. The battery pack of claim 7, wherein the first cable connector comprises:
a front cable connector (420A) fastened to the front module connector; and
a rear cable (420B) connector fastened to the rear module connector.

9. A vehicle comprising the battery pack according to any one of claims 1 through 8.

## Patentansprüche

1. Batteriepack, umfassend:
eine Packwanne (100), die einen Innenraum aufweist;
eine Vielzahl von Batteriemodulen (200), die in der Packwanne untergebracht ist;
ein Batteriemanagementsystem, BMS, (300), das in der Packwanne untergebracht ist;
eine erste Kabelanordnung (400A), die ausgebildet ist, um das BMS mit Batteriemodulen zu verbinden, die eine erste Modulgruppe (G1) aus der Vielzahl von Batteriemodulen bilden, wobei die erste Kabelanordnung über der ersten Modulgruppe angeordnet ist; und
eine zweite Kabelanordnung (400B), die ausgebildet ist, um das BMS mit Batteriemodulen zu verbinden, die eine zweite Modulgruppe (G2) aus der Vielzahl von Batteriemodulen bilden, wobei die zweite Kabelanordnung über der zweiten Modulgruppe angeordnet ist,
wobei die Packwanne (100) Folgendes umfasst:
eine Vielzahl von Trennwänden (110), die sich in einer Breitenrichtung der Packwanne erstreckt und den Innenraum der Packwanne unterteilt; und
einen Querträger (120), der sich in einer Längsrichtung der Packwanne erstreckt und den Innenraum der Packwanne unterteilt.

2. Batteriepack nach Anspruch 1, wobei die erste Modulgruppe (G1) auf einer Seite vom Querträger (120) angeordnet ist, und
die zweite Modulgruppe (G2) auf der anderen Seite vom Querträger (120) angeordnet ist.

3. Batteriepack nach Anspruch 1, wobei jedes der Vielzahl von Batteriemodulen (200) Folgendes umfasst:
einen Zellenstapel, in dem eine Vielzahl von Batteriezellen (210) gestapelt sind;
ein Modulgehäuse (220), in dem der Zellenstapel aufgenommen ist;
eine Messleitung (240), die elektrisch mit der Vielzahl von Batteriezellen verbunden ist; und
einen Modulsteckverbinder (250), der mit der Messleitung verbunden ist.

4. Batteriepack nach Anspruch 3, wobei das BMS (300) ein Paar von BMS-Steckverbindern (310A, 310B) umfasst, die jeweils an einer der ersten Modulgruppe (G1) entsprechenden Position und an einer der zweiten Modulgruppe (G2) entsprechenden Position bereitgestellt sind.

5. Batteriepack nach Anspruch 4, wobei jede der ersten Kabelanordnung (400A) und der zweiten Kabelanordnung (400B) Folgendes umfasst:
ein Messkabel (401), aufweisend ein gedrucktes Leiterbahnmuster;
eine Vielzahl von ersten Kabelsteckverbindern (420), die mit dem Messkabel verbunden und an dem Modulsteckverbinder befestigt sind; und
einen zweiten Kabelsteckverbinder (430), der mit dem Messkabel verbunden und an dem BMS-Steckverbinder befestigt ist.

6. Batteriepack nach Anspruch 5, wobei die Messleitung Folgendes umfasst:
eine vordere Messleitung (241), die auf einer Seite vom Zellenstapel angeordnet ist;
eine hintere Messleitung (242), die auf der anderen Seite vom Zellenstapel angeordnet ist; und
eine Verbindungs-Messleitung (243), die ausgebildet ist, um die vordere Messleitung mit der hinteren Messleitung zu verbinden,
wobei der Modulsteckverbinder (250) an die vordere Messleitung gekoppelt ist.

7. Batteriepack nach Anspruch 5, wobei die Messleitung (240) Folgendes umfasst:
eine vordere Messleitung (241), die auf einer Seite vom Zellenstapel angeordnet ist; und
eine hintere Messleitung (242), die auf der anderen Seite vom Zellenstapel angeordnet ist,
wobei der Modulsteckverbinder (250) Folgendes umfasst:
einen vorderen Modulsteckverbinder (250A), der an die vordere Messleitung gekoppelt ist; und
einen hinteren Modulsteckverbinder (250B), der an die hintere Messleitung gekoppelt ist.

8. Batteriepack nach Anspruch 7, wobei der erste Kabelsteckverbinder Folgendes umfasst:
einen vorderen Kabelsteckverbinder (420A), der an dem vorderen Modulsteckverbinder befestigt ist; und
einen hinteren Kabelsteck- (420B) -Verbinder, der an dem hinteren Modulsteckverbinder befestigt ist.

9. Fahrzeug, umfassend das Batteriepack nach einem der Ansprüche 1 bis 8.

## Revendications

1. Bloc-batterie comprenant :
un plateau (100) de bloc présentant un espace interne ;
une pluralité de modules (200) de batterie logés dans le plateau de bloc ;
un système de gestion de batterie, BMS, (300) logé dans le plateau de bloc ;
un premier ensemble (400A) câble configuré pour lier le BMS à des modules de batterie constituant un premier groupe (G1) de modules parmi la pluralité de modules de batterie, le premier ensemble câble étant situé sur le premier groupe de modules ; et
un second ensemble (400B) câble configuré pour lier le BMS à des modules de batterie constituant un second groupe (G2) de modules parmi la pluralité de modules de batterie, le second ensemble câble étant situé au-dessus du second groupe de modules,
dans lequel le plateau (100) de bloc comprend :
une pluralité de cloisons (110) s'étendant dans une direction de largeur du plateau de bloc et divisant l'espace interne du plateau de bloc ; et
une traverse (120) s'étendant dans une direction longitudinale du plateau de bloc et divisant l'espace interne du plateau de bloc.

2. Bloc-batterie selon la revendication 1, dans lequel le premier groupe (G1) de modules est situé sur un côté de la traverse (120), et
le second groupe (G2) de modules est situé sur l'autre côté de la traverse (120).

3. Bloc-batterie selon la revendication 1, dans lequel chacun de la pluralité de modules (200) de batterie comprend :
un empilement de cellules dans lequel une pluralité de cellules (210) de batterie sont empilées ;
un logement (220) de module dans lequel l'empilement de cellules est logé ;
une ligne (240) de détection électriquement liée à la pluralité de cellules de batterie ; et
un connecteur (250) de module lié à la ligne de détection.

4. Bloc-batterie selon la revendication 3, dans lequel le BMS (300) comprend une paire de connecteurs (310A, 310B) de BMS respectivement prévus à une position correspondant au premier groupe (G1) de modules et à une position correspondant au second groupe (G2) de modules.

5. Bloc-batterie selon la revendication 4, dans lequel chacun du premier ensemble (400A) câble et du second ensemble (400B) câble comprend :
un câble (401) de détection présentant un motif de circuit imprimé ;
une pluralité de premiers connecteurs (420) de câble liés au câble de détection et fixés au connecteur de module ; et
un second connecteur (430) de câble lié au câble de détection et fixé au connecteur de BMS.

6. Bloc-batterie selon la revendication 5, dans lequel la ligne de détection comprend :
une ligne (241) de détection avant située sur un côté de l'empilement de cellules ;
une ligne (242) de détection arrière située sur l'autre côté de l'empilement de cellules ; et
une ligne (243) de détection de liaison configurée pour relier la ligne de détection avant à la ligne de détection arrière,
dans lequel le connecteur (250) de module est couplé à la ligne de détection avant.

7. Bloc-batterie selon la revendication 5, dans lequel la ligne (240) de détection comprend :
une ligne (241) de détection avant située sur un côté de l'empilement de cellules ; et
une ligne (242) de détection arrière située sur l'autre côté de l'empilement de cellules,
dans lequel le connecteur (250) de module comprend :
un connecteur (250A) de module avant couplé à la ligne de détection avant ; et
un connecteur (250B) de module arrière couplé à la ligne de détection arrière.

8. Bloc-batterie selon la revendication 7, dans lequel le premier connecteur de câble comprend :
un connecteur (420A) de câble avant fixé au connecteur de module avant ; et
un connecteur de câble (420B) arrière fixé au connecteur de module arrière.

9. Véhicule comprenant le bloc-batterie selon l'une quelconque des revendications 1 à 8.
